# EUROPÄISCHE PATENTSCHRIFT

(11) **EP 1 969 310 B1**
(45) Veröffentlichungstag und Bekanntmachung des Hinweises auf die Patenterteilung: **12.01.2011**
(21) Anmeldenummer: 06830013.6
(22) Anmeldetag: 16.11.2006
(51) Int. Cl.: G01B 11/275

(54) **VERFAHREN ZUR OPTISCHEN FAHRWERKSVERMESSUNG**
METHOD FOR OPTICALLY MEASURING A CHASSIS
PROCÉDÉ DE MESURE OPTIQUE DE CHÂSSIS

(30) Priorität: 29.12.2005 DE 102005063051
(43) Veröffentlichungstag der Anmeldung: 17.09.2008
(73) Patentinhaber: Robert Bosch GmbH, 70442 Stuttgart (DE)
(72) Erfinder: UFFENKAMP, Volker, 71638 Ludwigsburg (DE); NOBIS, Guenter, 72622 Nuertingen (DE)
(86) Internationale Anmeldenummer: PCT/EP2006/068536
(87) Internationale Veröffentlichungsnummer: WO 2007/080011

(56) Entgegenhaltungen:
- DE-A1- 19 757 760
- US-A- 5 675 515

## Beschreibung

### Stand der Technik

Die Erfindung bezieht sich auf ein Verfahren zur optischen Fahrwerksvermessung von Kraftfahrzeugen an einem Prüfplatz, bei dem mit mindestens zwei in Position und Lage einander zugeordneten Bildaufnahmeeinrichtungen einer Bildaufnahmeanordnung oder anderen die Oberflächengeometrie erfassenden Sensoren einer anderen die Oberflächengeometrie erfassenden Messanordnung eine Orientierung dieser Anordnung bzw. Anordnungen bezüglich des Prüfplatzes mit Hilfe von am Prüfplatz angeordneten Referenzmerkmalen vorgenommen und in einer Auswerteeinrichtung auf der Basis der gewonnenen Orientierungsdaten und/oder Zuordnungsdaten sowie Messbereichsdaten eine Auswertung zum Bestimmen von Fahrwerksdaten unter Einbeziehung von Karosseriemerkmalen erfolgt, sowie auf eine Vorrichtung zur Durchführung des Verfahrens.

Ein derartiges Verfahren zur optischen Fahrwerksvermessung, nämlich insbesondere zum Vermessen von Rad- und Achsgeometriedaten wie Spur und Sturz, ist in der DE 100 50 653 A1 angegeben. Diese Druckschrift macht auch nähere Ausführungen zu verschiedenen Vorgehensweisen bei der Referenzierung der Messeinrichtung zur Vertikalenrichtung des Messplatzes (Prüfplatzes) und der gegenseitigen Zuordnung der Aufnahmestandorte (Position und Richtung) der Bildaufnahmeeinrichtungen in Bezug aufeinander. Die Referenzierung, im Folgenden auch Orientierung genannt, wird anhand von Bezugsmerkmalen (Referenzmerkmalen) im Messraum des Prüfplatzes vorgenommen, so dass beispielsweise eine Vertikalenebene zur Fahrbahnebene und die Fahrachse aus der Bewegung der Messmerkmale am Fahrzeug und daraus wiederum der Radachswinkel eines Rades bestimmt werden können. Auch ist beispielsweise angegeben, die optische Messeinrichtung während der Vorbeifahrt zu referenzieren, wobei der Auswerteeinrichtung zunächst unbekannte Bezugsmerkmale herangezogen werden. Eine Bestimmung der Fahrwerksdaten, bei diesem bekannten Verfahren also der Rad- und/oder der Achsgeometriedaten, wird anschließend unter Einbeziehung von Radmerkmalen und gegebenenfalls Karosseriemerkmalen durchgeführt, wobei die Messung bei stehendem Fahrzeug oder alternativ während einer Vorbeifahrt erfolgen kann.

Ähnliche Verfahren zum Bestimmen der Rad- und/oder Achsgeometrie von Kraftfahrzeugen sind auch in der DE 197 57 763 A1 und der EP 1 042 643 B1 angegeben. Hierbei ist am Prüfplatz eigens eine Bezugsmerkmalsanordnung positioniert. Auch in der DE 199 34 864 A1 ist ein auf der Basis dieser bekannten Verfahren entwickeltes optisches Messverfahren für die Rad- und/oder Achsgeometrie angegeben. Obwohl mit diesen Verfahren bzw. Vorrichtungen der Aufwand bei der Fahrwerksvermessung erheblich verringert werden konnte, sind noch einige Nachteile vorhanden, nämlich die Anpassbarkeit bei der Achsvermessung an unterschiedliche Radstände von Kleinwagen bis zu Oberklassefahrzeugen in Langversion, weil hierbei große Abmessungen des Trägergestells der Referenzmerkmale erforderlich sind, die eine unpraktikable Lösung z.B. für den Einsatz an einer Hebebühne ergeben. Ferner können Messmerkmale am Fahrzeug verdeckt und dadurch Messungenauigkeiten verursacht werden. Ferner sind zu nennen eine Verletzungsgefahr für Mechaniker, Gefahr der Beschädigung von Fahrzeugen während der Messung durch Kratzer oder Deformationen an der Karosserie, Einschränkung in der Flexibilität der Nutzung der belegten Werkstattfläche und Gefahr der Deformation des Trägergestells und daraus resultierender Genauigkeitsverlust. Bei der pendelnd aufgehängten Referenzmerkmalsanordnung ergibt sich eine umständliche Bedienung, wenn die Pendelanordnung vor der Messung mobil eingesetzt wird, u.a. weil die Endlage des Pendels abgewartet werden muss. Zudem ergibt der Einsatz des Pendels eine absolute Nivellierung des Messplatzes aufgrund der erfassten Schwerkraftrichtung, die in der Praxis nur ausnahmsweise vorhanden ist, so dass auch das in der DE 199 34 864 A1 beschriebene karosserietypische Koordinatensystem durch die Transformation der mit dem Pendel erfassten Schwerkraftrichtung auf die absolute Nivellierung bezogen ist. Der dabei ermittelte Sturz am beobachteten Rad ist daher ebenfalls auf die absolute Nivellierung bezogen und nicht auf das real vorhandene globale Messplatz-Koordinatensystem.

In der EP 0 895 056 A2 ist vorgeschlagen, für eine Achsvermessung ohnehin am Fahrzeugrad vorhandene Strukturen, nämlich insbesondere den Felgenrand heranzuziehen. Zum Bestimmen der 3D-Position und Lage der Radebene wird die Lage der Felgenrandebene aus den beiden Bildern zweier Bildaufnahmeeinrichtungen hergeleitet, wobei sprungartige Grauwertübergänge ausgewertet werden.

Jedoch sind zur Orientierung der Bildaufnahmeeinrichtungen und/oder Messeinheiten keine näheren Ausführungen gemacht.

US-A-5 675 515 beschreibt eine Anordnung zur optischen Fahrwerksvermessung von Kraftfahrzeugen mit einer Messeinheit, die zwei in Position und Lage einander zugeorndete Bildaufnahmeeinrichtungen aufweist. Zur Aufnahme des Fahrzeugs ist eine Hebebühne mit zwei Trägerschienen vorgesehen. An den Trägerschienen sind in der Ebene der Trägerschienen Referenzmerkmale fest angeordnet. Ein mobiler Träger mit Referenzmerkmalen kann auf die Trägerschienen der Hebebühne gesetzt werden, so dass der Messplatz in drei Dimensionen kalibriert werden kann.

Die hochgenaue Fahrwerksvermessung, insbesondere auch die Bestimmung der Rad- und Achsgeometrie von Fahrzeugen, gewinnt durch die zunehmend technisch verbesserten Fahrwerke immer mehr an Bedeutung. Neue und feiner abgestimmte Möglichkeiten zur Einstellung von Spur und Sturz der Einzelräder verlangen eine Messeinrichtung mit entsprechend hoher Genauigkeit, und zwar möglichst unbeeinflusst von den Bedingungen des jeweiligen Prüfplatzes. Dabei ist die Orientierung der Bildaufnahmeeinrichtungen bzw. diese enthaltenden Messeinheiten von wesentlicher Bedeutung.

Der Erfindung liegt die Aufgabe zugrunde, ein Verfahren und eine entsprechende Vorrichtung zur optischen Fahrwerksvermessung von Kraftfahrzeugen der eingangs genannten Art bereitzustellen, mit dem bei möglichst wenig Aufwand Fahrwerksdaten auch unter wechselnden Prüfplatzbedingungen hochgenau bestimmt werden können.

### Vorteile der Erfindung

Diese Aufgabe wird mit den Merkmalen des Anspruches 1 gelöst. Hierbei ist vorgesehen, dass zusätzlich zu fest am Prüfplatz angeordneten Referenzmerkmalen, die keine vollständige Beschreibung des Messplatz-Koordinatensystems ergeben, eine mobil am Prüfplatz einsetzbare Referenzeinrichtung positioniert wird, dass durch die Gesamtheit der Referenzmerkmale ein einheitliches Messplatz-Koordinatensystem definiert wird und damit in der übergeordneten Messeinrichtung die Orientierungsdaten der Messeinheiten gewonnen werden, und dass nach dem Auffahren des Fahrzeuges auf den Prüfplatz, beispielsweise die Drehplatte von den im Messplatz-Koordinatensystem orientierten Messeinheiten die Koordinaten der am Fahrzeug angeordneten Karosseriemerkmale bestimmt werden. Auf der Basis dieser Information wird das Messplatz-Koordinatensystem in der Anordnung der Karosseriemerkmale der Auswerteeinrichtung bekannt und ist damit für jede Bildaufnahmeeinrichtung zur von den Referenzmerkmalen unabhängigen Bestimmung der Fahrwerksdaten verfügbar.

Bei der Vorrichtung ist vorgesehen, dass die Referenzmerkmale zum Teil als feste Referenzmerkmale an einer bezüglich des Prüfplatzes festen Referenzeinrichtung und zum Teil als Referenzmerkmale in fester Zuordnung zueinander an einer bezüglich des Prüfplatzes mobilen Referenzeinrichtung angeangeordnet sind, und dass die mobile Referenzeinrichtung aus mehreren anpassbar gekoppelten Teilen besteht, die gleichzeitig auf zwei oder drei Drehplatten für die Fahrzeugräder aufstehen, wobei alle Teile der mobilen Referenzeinrichtung von den Messeinheiten gleichzeitig beobachtbar sind.

Bei der Auswertung werden erforderliche Ausgleichsrechnungen durchgeführt. Die gesamte, aus den gekoppelten Teilen zusammengesetzte mobile Referenzeinrichtung weist dabei eine an unterschiedliche Positionen der Drehplatten wegen unterschiedlicher Radstände der zu prüfenden Fahrzeuge anpassbare Länge auf.

Die Referenzmerkmale an der mobilen Referenzeinrichtung können als gleichzeitig oder nacheinander von gegenüberliegenden Seiten beobachtbare Kugelmarken oder als Anordnung von je zwei ebenen Messmarken zentrisch zu einer Durchgangsbohrung beidseitig auf einem Trägerblech bekannter Dicke ausgebildet sein, wobei sich die beiderseitigen Referenzmerkmale deckungsgleich gegenüberliegen oder ihre relative Lage der Messeinrichtung vorab bekannt ist. Falls mehr als zwei Referenzmerkmale an der mobilen Referenzeinrichtung vorhanden sind, können diese zweidimensional in einer Ebene oder räumlich versetzt zueinander angeordnet sein.

Weiterhin ist vorgesehen, dass die mobile Referenzeinrichtung auf den Drehplatten aufgestellt wird und zur Gewährleistung eines sicheren Stands mit drei Aufstandspunkten versehen ist.

Mit diesen Maßnahmen werden auch unter wechselnden Prüfplatzbedingungen mit relativ wenig Aufwand für die Bedienperson hoch genaue Fahrwerksvermessungen erreicht. Es wird eine automatische Orientierung der Bildaufnahmeeinrichtungen (beispielsweise Kameras) bzw. Messeinheiten (die jeweils mindestens zwei Bildaufnahmeeinrichtungen als mechanisch gekoppelte Einheit umfassen) im Messplatz-Koordinatensystem durchgeführt, wobei ein mobiler Einsatz der Bildaufnahmeeinrichtungen bzw. Messeinheiten z.B. zur Anpassung an unterschiedliche Radstände der zu prüfenden Fahrzeuge mit einfachen Maßnahmen gewährleistet wird. Unter Orientierung sei hierbei neben dem in den eingangs genannten Druckschriften erwähnten Begriff der Orientierung auch der dort verwendete Begriff der Referenzierung mit umfasst. Die Transformation des Messplatz-Koordinatensystems in die Anordnung der Karosseriemerkmale ergibt einen unmittelbaren Bezug zu dem tatsächlich vorhandenen aktuellen Prüfplatz und daher stets eindeutige zuverlässige Messergebnisse. Damit ist es auch möglich, das Fahrzeug nach erfolgter Koordinatentransformation zu bewegen, im Extremfall auch auf einen anderen Messplatz zu fahren. Das trifft auch auf die Schwimmbewegung des Fahrzeugs nach Lösen der Arretierungen an den die Räder aufnehmenden Drehplatten bzw. Schiebeplatten zu. Durch diese Koordinatentransformation ist es auch möglich, die Bildaufnahmeeinrichtungen bzw. Messeinheiten ohne Genauigkeitsverlust getrennt von der Hebebühne zu bewegen, wenn zur Durchführung von Einstellarbeiten das Fahrzeug mit der Hebebühne angehoben wird. Eine stabile (möglichst starre) und präzise Kopplung zwischen Hebebühne und Bildaufnahmeeinrichtungen bzw. Messeinheiten ist damit nicht erforderlich. Die Vermessung der 3D-Koordinaten der einzelnen Referenzmerkmale in einem gemeinsamen Messplatz-Koordinatensystem erfolgt mit an sich bekannten Verfahren der Messtechnik bzw. Vermessungstechnik beim erstmaligen Aufbau des gesamten Mess-Systems. Es wird eine hohe Messdynamik ohne Genauigkeitsverlust ermöglicht.

Eine einfache konstruktive Möglichkeit zur Abdeckung unterschiedlicher Radstände und Vorteile bei der Bedienung und Vermessung ergeben sich dadurch, dass die fest am Prüfplatz angeordneten Referenzmerkmale zur Orientierung der Bildaufnahmeeinrichtungen bzw. Messeinheiten bezüglich des Messplatz-Koordinatensystems in xy-Richtung herangezogen werden, wobei die Koordinaten der fest angeordneten Referenzmerkmale mindestens in den zwei Dimensionen in xy-Richtung in dem gemeinsamen Messplatz-Koordinatensystem der Messeinrichtung bekannt gemacht worden sind, und ferner dadurch , dass die mobile Referenzeinrichtung zur Orientierung der Bildaufnahmeeinrichtungen bzw. Messeinheiten bezüglich der in z-Richtung verlaufenden Senkrechten zur xy-Ebene des Messplatz-Koordinatensystems herangezogen wird. Aus Handhabungsgründen weist die mobile Referenzeinrichtung bzw. ein betreffender Teil der mobilen Referenzeinrichtung mindestens zwei Referenzmerkmale auf; theoretisch ist auch ein Referenzmerkmal ausreichend, jedoch mit dem Nachteil, dass die mobile Referenzeinrichtung mindestens in zwei unterschiedlichen Positionen auf jeder Drehplatte vermessen werden muss.

Zur Steigerung der Genauigkeit sind ferner die Maßnahmen von Vorteil, dass zumindest die mobile Referenzeinrichtung gleichzeitig von sich gegenüberliegenden Bildaufnahmeeinrichtungen bzw. Messeinheiten achsenweise getrennt oder für beide Achsen gleichzeitig beobachtet werden, wobei sich achsenweise auf die Vorderachse bzw. Hinterachse bezieht.

Ferner ist für eine genaue Auswertung vorgesehen, dass die Abstände der einzelnen Referenzmerkmale der mobilen Referenzeinrichtung zur Aufstandsfläche des Fahrzeuges der Messeinrichtung bekannt gemacht worden sind, wobei der Abstand der einzelnen Referenzmerkmale zur Fahrbahn bzw. zu den Drehplatten zugrunde gelegt wird, auf denen das Kraftfahrzeug während der Messung fährt bzw. steht. Zur Genauigkeit der Messung tragen weiterhin die Maßnahmen bei, dass die Orientierungsmessung an mindestens vier Positionen der Aufstandsfläche des Prüfplatzes, an denen das Fahrzeug während der Messung positioniert ist, erfolgt. Ferner werden die Zuverlässigkeit und Genauigkeit der Messungen dadurch unterstützt, dass eine Kompensation von durch Temperaturschwankungen bewirkten Änderungen der Messeinrichtung auf der Basis mindestens eines in der Auswerteeinrichtung hinterlegten Sollabstandes der mobilen oder der festen Referenzmerkmale durchgeführt wird und/oder dass auf der Basis des Sollabstandes eine Positionsstabilität oder eine Dekalibrierung der Bildaufnahmeeinrichtungen bzw. Messeinheiten hinsichtlich einer Langzeitänderung oder während einer Messung erkannt und gegebenenfalls korrigiert wird.

Weitere Maßnahmen zur Verbesserung der Genauigkeit bestehen darin, dass bei der Orientierung mehrere Bilder je Aufstandsposition aufgenommen und ausgewertet werden und eine anschließende Ausgleichsrechnung (z.B. Mittelung) durchgeführt wird.

Der Messaufwand wird weiterhin dadurch vereinfacht, dass die Orientierung der Bildaufnahmeeinrichtungen bzw. Messeinheiten in unterschiedlichen Positionen gegenüber dem Fahrzeug im Messplatz-Koordinatensystem automatisch erfolgt, das auch in der Anordnung der Karosseriemerkmale der Auswerteeinheit bekannt ist, wobei mindestens drei Karosseriemerkmale im Bildfeld der Bildaufnahmeeinrichtungen bzw. Messeinheiten erfasst werden, wobei zudem Einflüsse durch Handhabungsfehler ausgeschlossen werden.

Die Position des Rades bzw. aller Räder relativ zum Messplatz-Koordinatensystem kann zuverlässig zu jedem Zeitpunkt aus jedem mit den Bildaufnahmeeinrichtungen bzw. Messeinheiten aufgenommenen Bild berechnet werden, wobei bekannte Verfahren der Bildmesstechnik herangezogen werden. Das gilt auch, wenn zwischenzeitlich die Positionen der Bildaufnahmeeinrichtungen und/oder Messeinheiten gegenüber dem Fahrzeug, z.B. bei Schwingungen der Hebebühne in Folge eingeleiteter Kräfte bei Einstellarbeiten verändert worden sind.

Zur Unterstützung der Auswertung sind die Maßnahmen vorteilhaft, dass zum Gewinnen zusätzlicher Orientierungsdaten zumindest ein Teil der Referenzmerkmale mit Methoden der Bildverarbeitung aus auf dem Prüfplatz vorhandenen prüfplatzfesten Leuchtdichtstrukturen hergeleitet wird, dass die Orientierungsdaten durch automatischen Start oder automatisch auf Initiative eines Anwenders wiederholt überprüft werden, dass die Methoden der Bildverarbeitung eine 2D-Mustererkennung oder eine Analyse von dreidimensionalen Oberflächendaten unter Zugrundelegung einer 3D-Punktwolke umfassen, wobei entweder Informationen der 3D-Punktwolke unmittelbar zur Extraktion der Bezugsmerkmale zugrunde gelegt werden oder über einen Zwischenschritt aus der 3D-Punktwolke zuerst ein Oberflächenmodell abgeleitet wird und in einem nachfolgenden zweiten Schritt dann aus dem Oberflächenmodell die Bezugsmerkmale extrahiert werden und dass auf der Basis der 3D-Punktwolke ein dreidimensionales Oberflächenmodell als Höhenlinienmodell, als regelmäßiges Gitternetz oder durch Dreiecksvermaschung ermittelt wird.

Ferner wird die Zuverlässigkeit der Messungen dadurch unterstützt, dass in die Auswertung Kalibrierungsdaten einbezogen werden, die geometriebeschreibende Parameter der Bildaufnahmeeinrichtungen bzw. Messeinheiten beinhalten, wobei die Kalibrierungsdaten zumindest teilweise auf der Grundlage der Referenzmerkmale und/oder ergänzender Referenzmerkmale ermittelt und/oder überprüft werden, wobei der Auswerteeinrichtung bekannte Referenzmerkmale herangezogen werden.

### Zeichnungen

Die Erfindung wird nachfolgend anhand von Ausführungsbeispielen unter Bezugnahme auf die Zeichnungen näher erläutert. Es zeigen:
- Fig. 1A bis 1C: jeweils einen Messplatz (Prüfplatz) mit jeweils mehrere Messeinheiten mit Bildauf- nahmeeinrichtungen, einer mehrere feste Referenzmerkmale aufweisenden festen (sta- tionären) Referenzeinrichtung und unterschiedlich gestalteten Referenzmerkmale auf- weisenden mobilen Referenzeinrichtungen im Bereich einer Hebebühne,
- Fig. 2A und 2B: einen Messplatz nach Fig. 1 mit einem auf die Hebebühne gefahrenen Kraftfahrzeug in abgelassener und angehobener Stellung sowie mit Karosseriemerkmalen und Rad- merkmalen,
- Fig. 3A und 3B: in schematischer Darstellung im Teilbild A die Bestimmung einer Mustermatrix A in einem ersten digitalen Bild und im Teilbild B deren Positionierung in einem zweiten digitalen Bild an verschiedenen Positionen (1, 1) bzw. (n, m),
- Fig. 4: ein Beispiel für ein 3D-Oberflächenmodell mit regelmäßigem Gitternetz

### Ausführungsbeispiel

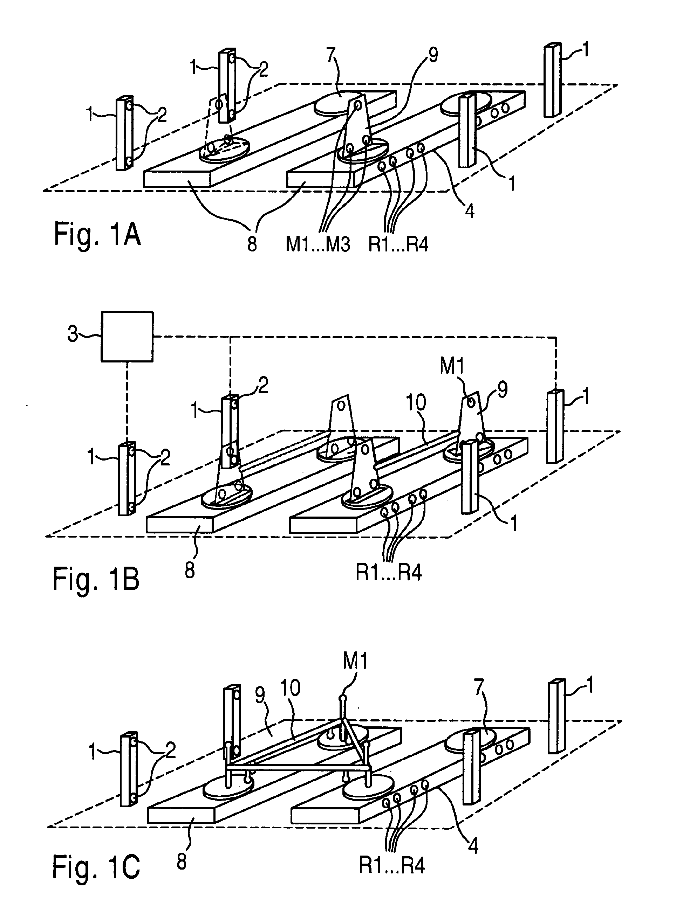

Fig. 1A zeigt in perspektivischer Darstellung einen Prüfplatz (Messplatz) einschließlich einer Hebebühne 8 und beidseitig von dieser aufgestellte Messeinheiten 1 mit jeweils beispielhaft zwei Bildaufnahmeeinrichtungen 2 insbesondere in Form von Kameras mit zugeordneter Elektronik. In der Messeinheit 1 sind die zugehörigen Bildaufnahmeeinrichtungen 2 mechanisch gekoppelt. Die beispielsweise aus zwei Längsträgern gebildete Hebebühne 8 weist auf ihrer Oberseite, wie an sich bekannt, Drehplatten 7 zum kräftefreien Aufnehmen der Fahrzeugräder auf und ist seitlich mit einer festen (stationären) Referenzeinrichtung 4 mit festen (stationären) Referenzmerkmalen R1 ... R4 als Seitenreferenz versehen. Auf eine oder mehrere Drehplatten 7 wird eine mobile Referenzeinrichtung 9 mit mehreren (beispielsweise drei) in festem Abstand zueinander angeordneten Referenzmerkmalen M1 ... M3 aufgestellt. Die Messeinheiten gehören zu einer Messeinrichtung bzw. einem Messsystem, das auch eine Auswerteeinrichtung 3 mit einer Recheneinrichtung aufweist, wie aus Fig. 1B ersichtlich. Recheneinheiten der Auswerteeinrichtung können teilweise auch bereits in den Messeinheiten 1 bzw. den Bildaufnahmeeinrichtungen 2, insbesondere Kameras, angeordnet sein, um eine Vorverarbeitung der erfassten Messsignale durchzuführen.

Bei dem Ausführungsbeispiel nach Fig. 1B ist gegenüber der Ausgestaltung nach Fig. 1A die mobile Referenzeinrichtung 9 derart modifiziert, dass zwei Teile mechanisch über ein vorzugsweise längenverstellbares aber starr festklemmbares Koppelstück 10 miteinander gekoppelt sind, so dass die beiden Teile der Referenzeinrichtung 9 auf einer jeweiligen Drehplatte 7 positionierbar und in diesem Abstand zueinander fixierbar sind. Die gesamte Referenzeinrichtung 9 kann von einem Träger der Hebebühne auf den anderen, und zwar auf die dort angeordneten Drehplatten 7 umgestellt werden.

Bei dem in Fig. 1 C gezeigten weiteren Ausführungsbeispiel der Messeinrichtung sind gegenüber der Ausführung nach Fig. 1A und Fig. 1B drei Teile zu einer in sich festen mobilen Referenzeinrichtung 9 über drei in sich vorzugsweise verstellbare aber starr festklemmbare Koppelstücke 10 zu einer mobilen Referenzeinrichtung 9 zusammengefasst, und zwar in der Weise, dass jedes der drei Teile auf einer Drehplatte 7 steht. Die Referenzmerkmale der mobilen Referenzeinrichtung 9 sind hierbei räumlich gegeneinander versetzt und als Kugeln ausgebildet, die an Tragemitteln, vorliegend an Stäben, starr gehalten sind.

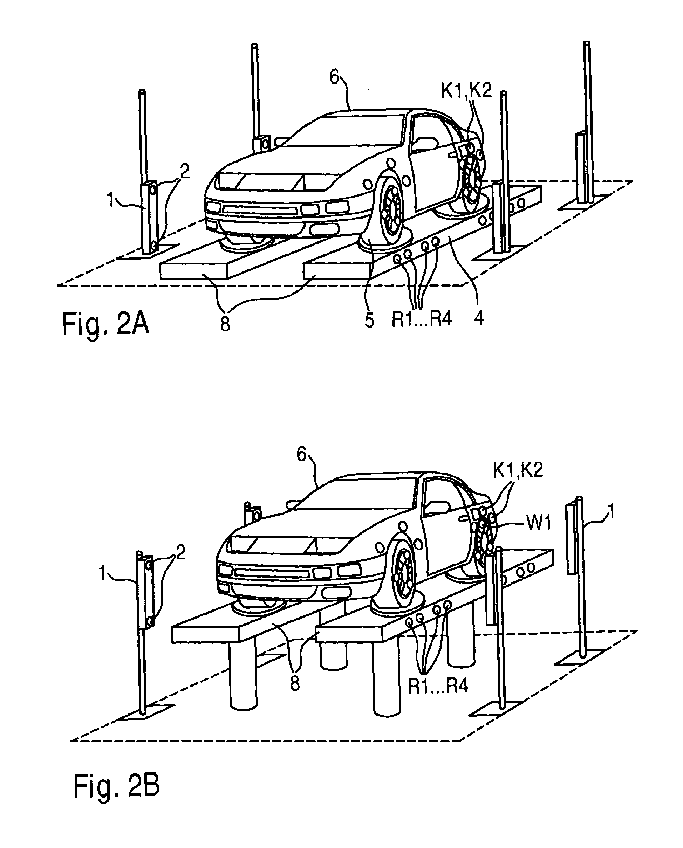

Die Aufteilung der Referenzeinrichtung in eine mobile Referenzeinrichtung 9 und eine feste Referenzeinrichtung 4 ergibt Vorteile für die Bedienung bei der Fahrwerksvermessung, da störende Teile auf dem Messplatz im Bereich des einzufahrenden bzw. zu positionierenden Kraftfahrzeugs 6 (s. Fig. 2A,2B) vor dem Auffahren des Fahrzeugs zur Fahrwerksvermesssung entfernt werden können, für die wichtige Orientierung der Bildaufnahmeeinrichtungen 2 bzw. Messeinheiten 1 jedoch problemlos auf dem Messplatz an geeigneter Stelle positioniert werden können. Die feste Referenzeinrichtung 4 indes ist auch während der Fahrwerksvermessung vorhanden und kann für Kontrollmessungen und Auswertungen zwischen und während den Messvorgängen jederzeit herangezogen werden, um z.B. ungewollte Bewegungen der Messapparatur, etwa der Messeinheiten 1 oder der Aufstellvorrichtung des Kraftfahrzeugs, festzustellen und gegebenenfalls zu kompensieren bzw. herauszurechnen. Weitere Vorteile dieses Aufbaus der Messvorrichtung sind einleitend genannt.

Die Messeinrichtung ist dabei so ausgebildet, dass die Referenzmerkmale M1 ... M3 der mobilen Referenzeinrichtung von beiden sich bezüglich der jeweiligen Fahrzeugachse (Vorderachse bzw. Hinterachse) gegenüberliegenden Seiten mit den dort positionierten Bildaufnahmeeinrichtungen 2 bzw. Messeinheiten 1 erfasst und zum Gewinnen der Orientierungsdaten aufgenommen werden können. Hierzu sind z.B. in der mobilen Referenzeinrichtung 9 gehaltene Kugelmarken, etwa wie in Fig. 1C gezeigt, oder auch bei einem Aufbau nach den Fig. 1A und 1B möglich, von Vorteil, da diese von beiden Seiten gleichermaßen beobachtbar sind. Andere vorteilhafte Ausgestaltungen für die beidseitige Beobachtung bestehen in einer Anordnung von zwei ebenen Messmarken zentrisch zu einer Durchgangsbohrung beidseitig auf einem Trägerblech bekannter Dicke oder einer Anordnung, bei der die relative Lage der Referenzmerkmale auf Vorder- und Rückseite des Trägers der mobilen Referenzeinrichtung 9 vorab vermessen und in der Messeinrichtung bzw. in der Auswerteeinrichtung 3 gespeichert werden.

Die Fig. 2A und 2B zeigen den Prüfplatz mit darauf positioniertem Kraftfahrzeug 6, einmal in abgelassener Stellung der Hebebühne 8 (Fig. 2A) und einmal im angehobenen Zustand (Fig. 2B). An dem Fahrzeug 6 selbst sind an der Karosserie, insbesondere im Bereich des Karosserieausschnitts um das Rad bzw. des Radhauses, Karosseriemerkmale K1, K2 ... angeordnet und ferner an den Rädern 5 Radmerkmale W1 ... angeordnet. Nach dem Aufstellen der mobilen Referenzeinrichtung auf die Drehplatten 7 des Prüfplatzes ist der Auswerteeinrichtung die Orientierung der Bildaufnahmeeinrichtungen 2 bzw. der Messeinheiten 1 im einheitlichen Messplatz-Koordinatensystem bekannt. Nach dem Auffahren des Fahrzeuges vorzugsweise auf die Drehplatten 7 des Messplatzes werden von den im Messplatz-Koordinatensystem orientierten Bildaufnahmeeinrichtungen 2 bzw. Messeinheiten 1 die Koordinaten der am Fahrzeug angeordneten Karosseriemerkmale bestimmt. Auf der Basis dieser Information ist das Messplatz-Koordinatensystem in der Anordnung der Karosseriemerkmale K1, K2 ... der Auswerteeinrichtung (3) bekannt. Es wird eine automatische Orientierung der Bildaufnahmeeinrichtungen 2 bzw. Messeinheiten 1 in unterschiedlichen Positionen gegenüber dem Fahrzeug 6 im einheitlichen (globalen) Messplatz-Koordinatensystem durchgeführt. Für die Berücksichtigung einer Positionsänderung gilt als Randbedingung, dass immer genügend viele, mindestens drei, Karosseriemerkmale K1, K2 ... im Bildfeld der Bildaufnahmeeinrichtungen 2 bzw. Messeinheiten 1 sichtbar sind.

Wenn zusätzlich mindestens drei Radmerkmale W1 ... im Bildfeld der Bildaufnahmeeinrichtungen 2 bzw. Messeinheiten 1 sichtbar sind, kann die Position des Rades bzw. aller Räder relativ zum Messplatz-Koordinatensystem zu jedem Zeitpunkt, d.h. aus jedem mit den Bildaufnahmeeinrichtungen 2 bzw. Messeinheiten 1 aufgenommenen Bild mit bekannten Verfahren der Bildmesstechnik berechnet werden. Das gilt auch für zwischenzeitlich veränderte Positionen der Bildaufnahmeeinrichtung 2 bzw. Messeinheiten 1 gegenüber dem Fahrzeug 6, z.B. bei Schwingungen der Hebebühne 8 infolge eingeleiteter Kräfte bei Einstellarbeiten. Damit wird weiterhin eine hohe Messdynamik ohne Genauigkeitsverlust erreicht.

Mit der Koordinatentransformation wird es möglich, die Bildaufnahmeeinrichtungen 2 bzw. Messeinheiten 1, z.B. wenn das Fahrzeug 6 mit der Hebebühne bei der Durchführung von Einstellarbeiten angehoben wird, ohne Genauigkeitsverlust getrennt von der Hebebühne zu bewegen, wie die Fig. 2A und 2B erkennen lassen. Eine stabile (möglichst starre) und präzise Kopplung zwischen Hebebühne 8 und Bildaufnahmeeinrichtungen 2 bzw. Messeinheiten 1 ist damit nicht erforderlich. Damit ist es auch möglich, das Fahrzeug nach erfolgter Koordinatentransformation zu bewegen, im Extremfall auch auf einen anderen Messplatz zu fahren. Das trifft auch auf die Schwimmbewegung des Fahrzeuges 6 nach Lösen der Arretierungen an den Drehplatten bzw. Schiebeplatten 7 zu. Auch dadurch wird eine hohe Messdynamik ohne Genauigkeitsverlust erreicht.

Als Referenzmerkmale R1 ... R4 bzw. M1 ... M3 werden gut sichtbare Marken, beispielsweise retroreflektierende Marken vorgesehen, die an der mobilen und auch festen Referenzeinrichtung 9 bzw. 4 stabil angebracht werden können. Insbesondere die festen Referenzmerkmale R1 ... R4 können im Laufe der Zeit aber beschädigt werden, so dass es vorteilhaft ist, z.B. ergänzend vorhandene Strukturen am Messplatz zur Gewinnung von Referenzmerkmalen unterstützend heranzuziehen. In gleicher Weise können auch ergänzende Karosseriemerkmale K1, K2 ... und/oder Radmerkmale W1 ... gewonnen werden.

Die ggf. zusätzliche Gewinnung der Referenzmerkmale wie auch der Karosseriemerkmale und/oder Radmerkmale aus einer ortsfesten, charakteristischen markanten und für eine sichere Unterscheidung kontrastreichen Leuchtdichtestruktur, die sich bei entsprechender Beleuchtung aus der Oberflächengeometrie der Messumgebung oder aber aus festen Beleuchtungsmustern ergibt, erfolgt vorteilhaft mit Methoden der Bildverarbeitung, die eine eindeutige, positionsgenaue reproduzierbare Erfassung der Referenzmerkmale bzw. Karosseriemerkmale bzw. Radmerkmale ermöglicht. Entsprechende Programme sind in der Auswerteeinrichtung 3 eingegeben, der die in dem betreffenden Objektausschnitt von den Bildaufnahmeeinrichtungen erfassten Bilddaten zugeführt werden.

Eine hierfür geeignete Methode der digitalen Bildverarbeitung besteht in der Ermittlung von Kanten aufgrund sprungartiger Grauwertübergänge, die auf der Grundlage einer Verarbeitung möglichst großer, steiler Grauwertsprünge zunächst in jedem Einzelbild von Bildpaaren erfolgt. Diese Methode ist z.B. dann günstig, wenn ein hohes, konstantes Beleuchtungsniveau ohne Störeinflüsse vorliegt.

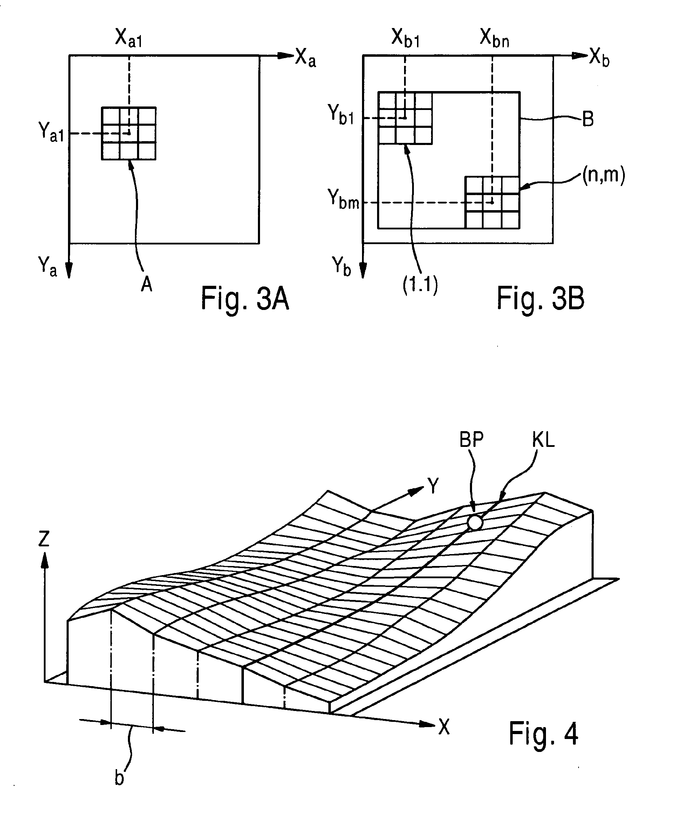

Störeinflüsse durch die Beleuchtung können besser mit einer Bildverarbeitungsmethode unterdrückt werden, die auf der an sich aus der Photogrammetrie als Bildkorrelation bekannten Vorgehensweise basiert. Die Bestimmung dreidimensionaler Oberflächengeometrien erfolgt hierbei anhand identischer Punkte in den getrennt aufgenommenen zweidimensionalen digitalen Bildern. Gemäß Fig. 3A und 3B wird bei der Durchführung der Bildkorrelation in einem ersten zweidimensionalen digitalen Bild (Teilbild 3A) eine Mustermatrix A und in einem zweiten zweidimensionalen digitalen Bild (Teilbild 3B) eine (in der Regel größere) Suchmatrix B definiert. Dann werden für alle möglichen Positionen (n, m) der Mustermatrix innerhalb der Suchmatrix die Korrelationskoeffizienten r bestimmt. Der Maximalwert des Korrelationskoeffizienten ergibt die wahrscheinlichste Lage der Mustermatrix A an betreffender Stelle der Suchmatrix B. Aus der so ermittelten Position der Mustermatrix in beiden Einzelbildern wird mit an sich bekannten Verfahren der Photogrammetrie ein 3D-Oberflächenpunkt ermittelt. Die Summe aller so gewonnenen 3D-Oberflächenpunkte wird als 3D-Punktwolke bezeichnet.

Aus dieser 3D-Punktwolke kann zusätzlich ein dreidimensionales Oberflächenmodell mit einem vorgegebenen oder vorgebbaren Raster b abgeleitet werden, wie beispielhaft in Fig. 4 dargestellt, wobei x, y, z die Raumkoordinaten bezeichnen. Eine 2D-Ausgleichsfunktion ist darin als fette Konturlinie KL eingetragen, auch ist ein Bezugspunkt BP für beispielsweise ein Referenzmerkmal angegeben.

Je nach gewünschter oder erforderlicher Präzision kann die Gewinnung der Merkmale mit einem mehr oder weniger großen Rechenaufwand betrieben werden, wobei z.B. partiell begrenzt mit einer höheren Dichte der 3D-Punktwolke und/oder partiell begrenzt mit einem kleineren Raster des Oberflächenmodells auch feine Oberflächenstrukturen genau erfasst werden können. Umgekehrt kann man in Teilen des Objektausschnittes, die für die Gewinnung beispielsweise der Referenzmerkmale unwichtig sind, partiell eine geringe Dichte der 3D-Punktwolke und/oder ein grobes Raster des Oberflächenmodells verwenden.

Nach der beschriebenen Methode der Bildkorrelation findet die Extraktion der relevanten Merkmale nicht im zweidimensionalen Bild (wie z.B. in der EP 0 895 056 beschrieben), sondern im dreidimensionalen Objektraum statt. Damit ergeben sich u.a. deutliche Vorteile in Form geringerer Störbeeinflussungen durch sich ändernde Beleuchtungs- bzw. Lichtverhältnisse und hinsichtlich der erreichbaren Genauigkeit unter normalen Werkstattbedingungen.

Nach der Messung der angebrachten Referenz-, Karosserie- und Radmerkmale und/oder natürlich vorhandener, durch Merkmalsextraktion zusätzlich gewonnenen Referenz-, Karosserie- und Radmerkmale, erfolgt die Orientierung des optischen Messsystems mit den beiden Bildaufnahmeeinrichtungen 2 und gegebenenfalls deren Zuordnung zueinander und, soweit erwünscht, auch eine Kalibrierung der Bildaufnahmeeinrichtungen. Sodann wird in einem weiteren Schritt die Bestimmung der Radebene und daraus im weiteren die Bestimmung der Radstellungswinkel durchgeführt, d.h. des Winkels zwischen der jeweiligen Radebene und den Fahrzeug-Referenzebenen.

Die Vorgehensweise bei der Gewinnung beispielsweise der Referenzmerkmale mittels der Methode der Bildkorrelation lässt sich im Einzelnen noch verfeinern, beispielsweise hinsichtlich der vorstehend genannten Gesichtspunkte zum Verringern des Rechenaufwandes oder der Charakteristik der Referenzmerkmale, wie Punkte, Linien und Flächen, wozu in der EP-A-1 875 164 nähere Ausführungen gemacht sind.

Zur Fahrwerksvermessung kann also die dreidimensionale Oberflächenstruktur der Messplatzumgebung zumindest ergänzend herangezogen werden, die anhand charakteristischer Geometriemerkmale ausgeprägt ist. Die Erfassung der Oberflächengeometrie erfolgt, wie vorstehend beschrieben, anhand der Bildverarbeitungsmethode zweidimensionaler Bilder oder vorzugsweise mit Bildkorrelation, wobei die 3D-Punktwolke aus dem mit minimal zwei Bildaufnahmeeinrichtungen 2 aus unterschiedlicher Position aufgenommenen Objektausschnitt ermittelt wird, die eine dreidimensionale Oberfläche der im Objektausschnitt vorhandenen Objektstrukturen mit einer Vielzahl von 3D-Bildpunkten räumlich wiedergibt. Aus der 3D-Punktwolke kann ein 3D-Oberflächenmodell mit verschiedenen Verfahren beschrieben werden, beispielsweise mit einem Höhenlinienmodell, durch Dreiecksvermaschung oder mit einem regelmäßigen Gitternetz. Auf der Grundlage der 3D-Punktwolke und/oder mindestens eines der beispielhaft genannten dreidimensionalen Oberflächenmodelle können dann beispielsweise charakteristische Referenzmerkmale gewonnen werden.

Als Referenzmerkmale bzw. Oberflächenstrukturen im Messraum für die Referenzmerkmale können z.B. Bohrungen, Schraubköpfe, Nieten oder dgl. zur Orientierung gegebenenfalls auch in Kombination mit eingebrachten charakteristischen Referenzmerkmalen wie Kreis, Dreieck, Rechteck oder Kugel, Würfel, Quader oder dgl. verwendet werden.

Erfolgt eine Fahrwerksvermessung in der Vorbeifahrt, wird zusätzlich die Bewegung der Karosserie im Messplatz-Koordinatensystem bestimmt. Dazu kann zusätzlich eine Ermittlung der 3D-Punktwolke bzw. des 3D-Oberflächenmodells nicht nur auf das Rad, sondern auch auf die das Rad umgebende Karosserie (Radhaus) erweitert werden.

Eine Genauigkeitssteigerung kann erreicht werden, wenn mehrere Bilder aufgenommen werden und eine Mittelung durchgeführt wird.

Optische Fahrwerks-Messeinrichtungen, beispielsweise zur Achsvermessung, sind in der Regel nicht langzeitstabil im Messraum fixiert, weil z.B. eine Verschiebung zum Vermessen verschiedener Fahrzeugtypen und eine Anpassung an verschiedene Radstände erforderlich ist. Daher ist es vorteilhaft, die Orientierung zu jedem Zeitpunkt der Fahrwerksvermessung oder zumindest von Zeit zu Zeit durchzuführen. Auch ist eine einfache, genaue Orientierung vorteilhaft, um die Mobilität der Messeinrichtung zu ermöglichen und um die Stabilität der mindestens zwei in Position und Lage einander zugeordneten Bildaufnahmeeinrichtungen an einer Bildaufnahmeanordnung oder anderen die Oberflächengeometrie erfassenden Sensoren einer anderen die Oberflächengeometrie erfassenden Messanordnung eine Orientierung dieser Anordnung bzw. Anordnungen bezüglich des Prüfplatzes während der Fahrwerksvermessung zu überwachen. Für die Überwachung können auch weniger als drei Merkmale verwendet werden.

## Patentansprüche

1. Verfahren zur optischen Fahrwerksvermessung von Kraftfahrzeugen an einem Prüfplatz (4), bei dem für mehrere Messeinheiten (1) mit zwei in Position und Lage einander zugeordneten Bildaufnahmeeinrichtungen (2) eine Orientierung bezüglich des Prüfplatzes (4) mit Hilfe von am Prüfplatz fest angeordneten Referenzmerkmalen (R1 ... R4) vorgenommen wird und in einer Auswerteeinrichtung (3) auf der Basis gewonnener Orientierungsdaten eine Auswertung zum Bestimmen von Fahrwerksdaten erfolgt, **dadurch gekennzeichnet,**
**dass** zusätzlich zu den fest am Prüfplatz (4) angeordneten Referenzmerkmalen (R1 ... R4) eine mobil am Prüfplatz einsetzbare Referenzeinrichtung (9) mit Referenzmerkmalen (M1 ... M3) positioniert wird, dass durch die Gesamtheit der Referenzmerkmale ein einheitliches Messplatz-Koordinaten-System definiert wird und damit in einer übergeordneten Messeinrichtung die Orientierungsdaten der Messeinheiten (1) gewonnen werden, und dass nach dem Auffahren des Fahrzeuges auf den Prüfplatz von den im Messplatz-Koordinatensystem orientierten Messeinheiten (1) die Koordinaten von am Fahrzeug angeordneten Karosseriemerkmale (K1, K2...) bestimmt werden und auf der Basis dieser Information das Messplatz-Koordinatensystem in der Anordnung der Karosseriemerkmale (K1, K2...) bekannt wird und damit für jede Messeinheit (1) zur von den Referenzmerkmalen unabhängigen Bestimmung der Fahrwerksdaten der Auswerteeinrichtung (3) verfügbar wird.

2. Verfahren nach Anspruch 1, **dadurch gekennzeichnet,**
**dass** die am Prüfplatz angeordneten Referenzmerkmale (R1 ... R4) zur Orientierung der Messeinheiten (1) bezüglich des Messplatz-Koordinatensystems in xy-Richtung herangezogen werden, wobei die Koordinaten der fest angeordneten Referenzmerkmale (R1 ... R4) mindestens in den zwei Dimensionen in xy-Richtung in dem gemeinsamen Messplatz-Koordinatensystem der Messeinrichtung (3) bekannt gemacht worden sind.

3. Verfahren nach Anspruch 1, **dadurch gekennzeichnet,**
**dass** die mobile Referenzeinrichtung (9) mit den Referenzmerkmalen (M1 ... M3) zur Orientierung der Messeinheiten (1) bezüglich der in z-Richtung verlaufenden Senkrechten zur xy-Ebene des Messplatz-Koordinatensystems herangezogen wird.

4. Verfahren nach einem der vorhergehenden Ansprüche, **dadurch gekennzeichnet,**
**dass** zumindest die mobile Referenzeinrichtung (9) gleichzeitig von sich gegenüberliegenden Messeinheiten (1) achsenweise getrennt oder für beide Achsen gleichzeitig beobachtet wird, wobei sich achsenweise auf die Vorderachse bzw. Hinterachse bezieht.

5. Verfahren nach einem der vorhergehenden Ansprüche, **dadurch gekennzeichnet,**
**dass** die Abstände der einzelnen Referenzmerkmale (M1 ... M3) der mobilen Referenzeinrichtung (9) zur Aufstandsfläche des Fahrzeuges (6) der Messeinrichtung bekannt gemacht worden sind.

6. Verfahren nach einem der vorhergehenden Ansprüche, **dadurch gekennzeichnet,**
**dass** die Messung der mobilen Referenzeinrichtung (9) mit den Referenzmerkmalen (M1 ... M3) zur Orientierung der Messeinheiten (1) an mindestens vier Positionen der Aufstandsfläche des Prüfplatzes (1), an denen das Fahrzeug (6) während der Messung positioniert wird, erfolgt.

7. Verfahren nach einem der vorhergehenden Ansprüche, **dadurch gekennzeichnet,**
**dass** eine Kompensation von durch Temperaturschwankungen bewirkten Änderungen auf der Basis mindestens eines in der Auswerteeinrichtung (3) hinterlegten Sollabstandes der mobilen oder der festen Referenzmerkmale (M1 ... M3; R1 ... R4) durchgeführt wird.

8. Verfahren nach einem der vorhergehenden Ansprüche, **dadurch gekennzeichnet,**
**dass** bei der Messung der mobilen Referenzeinrichtung (9) mit den Referenzmerkmalen (M1 ... M3) zur Orientierung der Messeinheiten (1) mehrere Bilder aufgenommen und ausgewertet werden und eine anschließende Ausgleichsrechnung durchgeführt wird.

9. Verfahren nach einem der vorhergehenden Ansprüche, **dadurch gekennzeichnet,**
**dass** zusätzlich zu den Karosseriemerkmalen (K1, K2, ...) mindestens drei Radmerkmale (W1 ...) im Bildfeld der Messeinheiten (1) erfasst werden, woraus die Position mindestens eines Rades (5) relativ zum Messplatz-Koordinatensystem gegebenenfalls auch nach zwischenzeitlich geänderten Positionen der Messeinheiten (1) gegenüber dem Fahrzeug (6) berechnet wird.

10. Verfahren nach einem der vorgehenden Ansprüche, **dadurch gekennzeichnet,**
**dass** in die Auswertung Kalibrierungsdaten einbezogen werden, die geometriebeschreibende Parameter der Messeinheiten (1) beinhalten, wobei die Kalibrierungsdaten zumindest teilweise auf der Grundlage der Referenzmerkmale und/oder ergänzender Referenzmerkmale ermittelt und/oder überprüft werden, wobei von der Auswerteeinrichtung (3) bekannte Referenzmerkmale herangezogen werden.

11. Vorrichtung zur Durchführung des Verfahrens nach einem der vorhergehenden Ansprüche mit einem Prüfplatz (1) und mit mehreren Messeinheiten (1) mit zwei in Position und Lage einander zugeordneten Bildaufnahmeeinrichtungen (2) und mit einer Auswerteeinrichtung (3), wobei eine übergeordnete Messeinrichtung zum Durchführen einer Orientierung der Messeinheiten (1) und zum Gewinnen von Orientierungsdaten auf der Basis von am Prüfplatz (1) angeordneten Referenzmerkmalen sowie Messbereichsdaten und zum Bestimmen von Fahrwerksdaten unter Einbeziehung von Karosseriemerkmalen (K1, K2,...) ausgebildet ist, wobei die Referenzmerkmale zum Teil als feste Referenzmerkmale (R1 ... R4) an einer bezüglich des Prüfplatzes (1) festen Referenzeinrichtung (4) und zum Teil als Referenzmerkmale (M1 ... M3) in fester Zuordnung zueinander an einer bezüglich des Prüfplatzes (1) mobilen Referenzeinrichtung (9) angeordnet sind, **dadurch gekennzeichnet,**
**dass** die mobile Referenzeinrichtung (9) aus mehreren anpassbar mechanisch gekoppelten Teilen besteht, die gleichzeitig auf zwei oder drei Drehplatten (7) für die Fahrzeugräder (5) aufstehen, wobei alle Teile der mobilen Referenzeinrichtung (9) von den Messeinheiten (1) gleichzeitig beobachtbar sind.

12. Vorrichtung nach Anspruch 11, **dadurch gekennzeichnet,**
**dass** die Referenzmerkmale (M1 ... M3) der mobilen Referenzeinrichtung als gleichzeitig oder nacheinander von gegenüberliegenden Seiten beobachtbare Kugelmarken oder als Anordnung von je zwei ebenen Messmarken zentrisch zu einer Durchgangsbohrung beidseitig auf einem Trägerblech bekannter Dicke ausgebildet sind, wobei sich die beiderseitigen Referenzmerkmale deckungsgleich gegenüberliegen oder ihre relative Lage der Messeinrichtung vorab bekannt ist, und dass - falls mehr als zwei mobile Referenzmerkmale vorhanden sind - diese zweidimensional in einer Ebene oder räumlich versetzt zueinander angeordnet sind.

## Claims

1. Method for optically measuring chassis of motor vehicles in a testing station (4), in the case of which an orientation with reference to the testing station (4) is undertaken for a plurality of measuring units (1) with two image recording devices (2) assigned to one another in position and location, this being done with the aid of reference features (R1 ... R4) fixedly arranged at the testing station, and an evaluation is performed in an evaluation device (3) on the basis of orientation data obtained in order to determine chassis data, **characterized in that** in addition to the reference features (R1 ... R4) fixedly arranged at the testing station (4) there is positioned a reference device (9) which can be used in a mobile fashion at the testing station and has reference features (M3 ... M3), **in that** the totality of reference features defines a standard measuring station coordinate system and the orientation data of the measuring units (1) are therefore obtained in a higher level measuring device, and **in that** after the vehicle has been driven onto the testing station the measuring units (1) orientated in the measuring station coordinate system determine the coordinates of bodywork features (K1, K2 ...) arranged on the vehicle, and on the basis of this information the measuring station coordinate system is acknowledged in the arrangement of the bodywork features (K1, K2 ...), and is therefore available to the evaluation device (3) for each measuring unit (1) for the purpose of determining the chassis data independently of the reference features.

2. Method according to Claim 1, **characterized in that** the reference features (R1 ... R4), arranged at the testing station, are used for the purpose of orientating the measuring units (1) with reference to the measuring station coordinate system in the xy-direction, the coordinates of the fixedly arranged reference features (R1 ... R4) having been notified at least in the two dimensions in the xy-direction in the common measuring station coordinate system to the measuring device (3).

3. Method according to Claim 1, **characterized in that** the mobile reference device (9) having the reference features (M3 ... M3) is used for the purpose of orientating the measuring units (1) with reference to the perpendicular, running in the z-direction, to the xy-plane of the measuring station coordinate system.

4. Method according to one of the preceding claims, **characterized in that** at least the mobile reference device (9) is observed simultaneously by measuring units (1) opposite one another in a fashion separately by axle or for both axles simultaneously, "by axle" referring to the front axle or rear axle.

5. Method according to one of the preceding claims, **characterized in that** the spacings of the individual reference features (M3 ... M3) of the mobile reference device (9) from the standing surface of the vehicle (6) have been notified to the measuring device.

6. Method according to one of the preceding claims, **characterized in that** the measurement of the mobile reference device (9) with the reference features (M1 ... M3) is performed for the purpose of orientating the measuring units (1) at at least four positions of the standing surface of the testing station (4) at which the vehicle (6), is positioned during the measurement.

7. Method according to one of the preceding claims, **characterized in that** changes effected by temperature fluctuations are compensated on the basis of at least one desired spacing of the mobile or the fixed reference features (M1 ... M3; R1 ... R4) which is stored in the evaluation device (3).

8. Method according to one of the preceding claims, **characterized in that** during the measurement of the mobile reference device (9) with the reference features (M1 ... M3) for the purpose of orientating the measuring units (1) a plurality of images are recorded and evaluated and compensation is carried out subsequently.

9. Method according to one of the preceding claims, **characterized in that** in addition to the bodywork features (K1, K2, ...) at least three wheel features (W1 ...) are detected in the image field of the measuring units (1), and from this the position of at least one wheel (5) relative to the measuring station coordinate system is calculated with respect to the vehicle (6), if appropriate also in terms of positions of the measuring units (1) that have changed in the meantime.

10. Method according to one of the preceding claims, **characterized in that** incorporated into the evaluation are calibration data which include descriptive geometrical parameters of the measuring units (1), the calibration data being determined and/or checked at least partially on the basis of the reference features and/or supplementary reference features, known reference features being used by the evaluation device (3).

11. Device for performing the method according to one of the preceding claims having a testing station (4) and having a plurality of measuring units (1) having two image recording devices (2), assigned to one another in position and location, and having an evaluation device (3), a higher level measuring device being designed to orientate the measuring units (1) and to obtain orientation data on the basis of reference features arranged at the testing station (4) as well as measuring range data, and to determine chassis data with the cooperation of bodywork features (K1, K2, ...), the reference features being arranged partly as fixed reference features (R1 ... R4) on a reference device (9) fixed with reference to the testing station (4), and partly as reference features (M1 ... M3) in a fixed assignment to one another on a reference device (9) which is mobile with reference to the testing station (4), **characterized in that** the mobile reference device (9) consists of a plurality of parts which are coupled in a mechanically adaptable fashion and which simultaneously stand on two or three rotary plates (7) for the vehicle wheels (5), it being possible for the measuring units (1) to observe all the parts of the mobile reference device (9) simultaneously.

12. Device according to Claim 11, **characterized in that** the reference features (M1 ... M3) of the mobile reference device are designed as spherical marks which can be observed simultaneously or successively from opposite sides, or as an arrangement of in each case two planar measuring marks in a centric fashion relative to a through bore on either side of a supporting plate of known thickness, the reference features on either side being congruently opposite one another, or their location relative to the measuring device being known in advance, and **in that** - if more than two mobile reference features are present - the latter are arranged in two dimensions in a plane or spatially offset from one another.

## Revendications

1. Procédé de mesurage optique du train de roulement de véhicules automobiles sur un banc d'essai (4), selon lequel pour plusieurs unités de mesure (1) une orientation par rapport au banc d'essai (4) est réalisée à l'aide de caractéristiques de référence (R1 ... R4) montées à demeure sur le banc d'essai avec deux dispositifs d'acquisition d'image (2) associés l'un à l'autre en position et en situation et une interprétation est effectuée dans un dispositif d'interprétation (3) sur la base des données d'orientation acquises pour déterminer des données du train de roulement, **caractérisé en ce qu'**en plus des caractéristiques de référence (R1 ... R4) montées à demeure sur le banc d'essai (4), un dispositif de référence (9) muni de caractéristiques de référence (M1 ... M3) utilisable de manière mobile sur le banc d'essai est positionné, qu'un système de coordonnées uniforme du banc de mesure est défini par l'ensemble des caractéristiques de référence et les données d'orientation des unités de mesure (1) dans un dispositif de mesure superviseur sont ainsi obtenues, et qu'après la montée du véhicule sur le banc d'essai, les coordonnées de caractéristiques de carrosserie (K1, K2, ...) disposées sur le véhicule sont déterminées par les unités de mesure (1) orientées dans le système de coordonnées du banc de mesure et le système de coordonnées du banc de mesure est connu dans l'arrangement des caractéristiques de carrosserie (K1, K2, ...) sur la base de ces informations et le dispositif d'interprétation (3) est ainsi rendu disponible pour chaque unité de mesure (1) pour déterminer les données du train de roulement indépendamment des caractéristiques de référence.

2. Procédé selon la revendication 1, **caractérisé en ce que** les caractéristiques de référence (R1 ... R4) montées sur le banc d'essai sont utilisées pour l'orientation dans la direction XY des unités de mesure (1) par rapport au système de coordonnées du banc de mesure, les coordonnées des caractéristiques de référence (R4 ... R4) montées à demeure ayant été portées à la connaissance du dispositif de mesure (3) au moins dans les deux dimensions dans la direction XY dans le système de coordonnées du banc de mesure commun.

3. Procédé selon la revendication 1, **caractérisé en ce que** le dispositif de référence mobile (9) muni des caractéristiques de référence (M3 ... M3) est utilisé pour l'orientation des unités de mesure (1) par rapport au système de coordonnées du banc de mesure qui, dans la direction Z, s'étend perpendiculairement au plan XY.

4. Procédé selon l'une des revendications précédentes, **caractérisé en ce qu'**au moins le dispositif de référence mobile (9) est observé simultanément par des unités de mesure (1) opposées l'une à l'autre séparément pour chaque essieu ou simultanément pour les deux essieux, "pour chaque essieu" se référant à l'essieu avant ou à l'essieu arrière.

5. Procédé selon l'une des revendications précédentes, **caractérisé en ce que** les écarts entre les caractéristiques de référence (M3 ... M3) du dispositif de référence mobile (9) et la surface de contact au sol du véhicule (6) ont été portés à la connaissance du dispositif de mesure.

6. Procédé selon l'une des revendications précédentes, **caractérisé en ce que** la mesure du dispositif de référence mobile (9) muni des caractéristiques de référence (M1 ... M3) pour l'orientation des unités de mesure (1) s'effectue en au moins quatre positions de la surface de contact au sol du banc d'essai (4) sur lequel est positionné le véhicule (6) pendant la mesure.

7. Procédé selon l'une des revendications précédentes, **caractérisé en ce qu'**une compensation des modifications provoquées par les fluctuations de la température est effectuée sur la base d'au moins un écart de consigne enregistré dans le dispositif d'interprétation (3) des caractéristiques de référence (M1 ... M3 ; R1 ... R4) mobiles ou fixes.

8. Procédé selon l'une des revendications précédentes, **caractérisé en ce que** lors de la mesure du dispositif de référence mobile (9) muni des caractéristiques de référence (M1 ... M3) pour l'orientation des unités de mesure (1), plusieurs images sont acquises et interprétées et un calcul de comparaison est ensuite effectué.

9. Procédé selon l'une des revendications précédentes, **caractérisé en ce qu'**en plus des caractéristiques de carrosserie (K1, K2, ...), au moins trois caractéristiques de roue (W1 ...) sont acquises dans le champ d'image des unités de mesure (1), à partir desquelles est calculée par rapport au véhicule (6) la position d'au moins une roue (5) par rapport au système de coordonnées du banc de mesure, le cas échéant également selon des positions modifiées entre temps des unités de mesure (1).

10. Procédé selon l'une des revendications précédentes, **caractérisé en ce que** des données de calibrage interviennent dans l'interprétation, lesquelles comprennent des paramètres de description géométrique des unités de mesure (1), les données de calibrage étant déterminées et/ou vérifiées au moins partiellement en se basant sur les caractéristiques de référence et/ou des caractéristiques de référence complémentaires, des caractéristiques de référence connues du dispositif d'interprétation (3) étant utilisées.

11. Dispositif pour mettre en oeuvre le procédé selon l'une des revendications précédentes, comprenant un banc d'essai (4) et comprenant plusieurs unités de mesure (1) avec deux dispositifs d'acquisition d'image (2) associés l'un à l'autre en position et en situation et comprenant un dispositif d'interprétation (3), un dispositif de mesure superviseur étant configuré pour effectuer une orientation des unités de mesure (1) et collecter des données d'orientation sur la base de caractéristiques de référence montées sur le banc d'essai (4) ainsi que de données de plage de mesure et pour déterminer des données du train de roulement en faisant intervenir des caractéristiques de carrosserie (K1, K2, ...), les caractéristiques de référence étant en partie montées sous la forme de caractéristiques de référence (R1 ... R4) fixes sur un dispositif de référence (9) fixe par rapport au banc d'essai (4) et en partie sous la forme de caractéristiques de référence (M3 ... M3) ayant une association fixe entre elles et se trouvant sur un dispositif de référence (9) mobile par rapport au banc d'essai (4), **caractérisé en ce que** le dispositif de référence (9) mobile se compose de plusieurs parties adaptables et accouplées mécaniquement qui se dressent simultanément sur deux ou trois plaques tournantes (7) pour les roues du véhicule (5), toutes les parties du dispositif de référence (9) mobile pouvant être observées simultanément par les unités de mesure (1).

12. Dispositif selon la revendication 11, **caractérisé en ce que** les caractéristiques de référence (M3 ... M3) du dispositif de référence mobile sont réalisées sous la forme de repères sphériques pouvant être observés simultanément ou l'un après l'autre depuis des côtés opposés ou sous la forme d'un arrangement de deux repères de mesure respectivement plans centrés par rapport à un orifice traversant des deux côtés d'une tôle porteuse d'épaisseur connue, les caractéristiques de référence situées des deux côtés étant opposées en coïncidence ou leur situation relative étant connue à l'avance par le dispositif de mesure et que, s'il existe plus que deux caractéristiques de référence mobiles, celles-ci sont disposées en deux dimensions dans un plan ou avec un décalage dans l'espace entre elles.
